# EUROPEAN PATENT APPLICATION

(11) **EP 4 742 691 A1**
(43) Date of publication of application: **13.05.2026**
(21) Application number: 24845908.3
(22) Date of filing: 17.07.2024
(51) Int. Cl.: H04N 23/67, H04N 23/63, H04N 23/62, H04N 23/45, H04N 23/54, H04N 23/55, G01S 17/08

(54) **METHOD AND ELECTRONIC DEVICE FOR AUTOMATIC FOCUS CONTROL**

(30) Priority: 25.07.2023 KR 20230096968; 04.10.2023 KR 20230131847
(71) Applicant: Samsung Electronics Co., Ltd., Suwon-si, Gyeonggi-do 16677 (KR)
(72) Inventor: KIM, Yunjeong, Suwon-si Gyeonggi-do 16677 (KR); JO, Hyeoncheol, Suwon-si Gyeonggi-do 16677 (KR); KIM, Dongsoo, Suwon-si Gyeonggi-do 16677 (KR); PARK, Minyoung, Suwon-si Gyeonggi-do 16677 (KR); SHIM, Jaekyu, Suwon-si Gyeonggi-do 16677 (KR); CHOI, Muncheol, Suwon-si Gyeonggi-do 16677 (KR)
(74) Representative: Nederlandsch Octrooibureau
(86) International application number: PCT/KR2024/010251
(87) International publication number: WO 2025/023606

(57) **Abstract**

An electronic device according to an embodiment of the disclosure may include a plurality of cameras having different focal lengths, a sensor for detecting a distance, a display, a processor, and a memory for storing instructions. The instructions may be configured to, when executed by the processor, cause the electronic device to receive an input for starting execution of a camera application. The instructions may be configured to, when executed by the processor, cause the electronic device to, after receiving the input, obtain distance information of an object through the sensor, before displaying a preview image by the execution of the camera application. The instructions may be configured to, when executed by the processor, cause the electronic device to select a camera for capturing an image of the object from the plurality of cameras based on the distance information. The instructions may be configured to, when executed by the processor, cause the electronic device to identify an initial focus position of the selected camera based on the distance information of the object. The instructions may be configured to, when executed by the processor, cause the electronic device to display a preview image containing the object on the display based on the initial focus position of the selected camera. Other various embodiments are possible obtained from this document.

## Description

### [Technical Field]

The disclosure relates to a method for controlling autofocus during image capturing and an electronic device thereof.

### [Background Art]

As carrying a portable electronic device in daily life becomes common, camera function utilization of the portable electronic device significantly increases, and image capturing using the portable electronic device is recognized as such an indispensable feature that the camera function become a criterion for selecting a portable electronic device. In recent, as the camera function implemented in the portable electronic device is more advanced, an autofocus function for automatically focusing on a subject is established as a standard feature of the portable electronic device. For example, if the autofocus function is activated, the electronic device detects a shooting distance at which the subject to be captured is located, moves a camera lens according to the detected shooting distance to adjust its focus, and thus clearly captures the subject.

The foregoing information may be provided as related art for the purpose of aiding understanding of the disclosure. No claim or determination is made as to whether any of the foregoing may be applied as the prior art in connection with the disclosure.

### [Disclosure of Invention]

### [Solution to Problem]

An electronic device according to an embodiment of the disclosure may include a plurality of cameras having different focal lengths, one or more sensors for detecting a distance to an object, a display, a processor, and a memory for storing instructions. The instructions may be configured to, when executed by the processor, cause the electronic device to receive an input for starting execution of a camera application. The instructions may be configured to, when executed by the processor, cause the electronic device to, after receiving the input, obtain distance information of an object through the sensor, before displaying a preview image by the execution of the camera application. The instructions may be configured to, when executed by the processor, cause the electronic device to select a camera for capturing an image of the object from the plurality of cameras based on the distance information. The instructions may be configured to, when executed by the processor, cause the electronic device to identify an initial focus position of the selected camera based on the distance information of the object. The instructions may be configured to, when executed by the processor, cause the electronic device to display a preview image containing the object on the display based on the initial focus position of the selected camera.

An operating method of an electronic device according to an embodiment of the disclosure may include receiving an input for starting execution of a camera application. The operating method of the electronic device may include, after receiving the input, obtaining distance information of an object through a sensor, before displaying a preview image by the execution of the camera application. The operating method of the electronic device may include selecting a camera for capturing an image of the object among a plurality of cameras 310 based on the distance information. The operating method of the electronic device may include identifying an initial focus position of the selected camera based on the distance information for the object. The operating method of the electronic device may include displaying a preview image containing the object on the display 330 based on the initial focus position of the selected camera.

A computer-readable recording medium according to an embodiment of the disclosure may include programs executable in a computer. The programs may perform an operation of receiving an input for starting execution of a camera application. The programs may perform an operation of, after receiving the input, obtaining distance information of an object through a sensor, before displaying a preview image by the execution of the camera application. The programs may perform an operation of selecting a camera for capturing an image of the object among a plurality of cameras based on the distance information. The programs may perform an operation of identifying an initial focus position of the selected camera based on the distance information for the object. The programs may perform an operation of displaying a preview image containing the object based on the initial focus position of the selected camera.

### [Brief Description of Drawings]

FIG. 1 is a block diagram of an electronic device within a network environment according to an embodiment.
FIG. 2 is a block diagram illustrating a camera module, according to various embodiments.
FIG. 3 is a diagram illustrating a configuration of an electronic device, according to an embodiment.
FIG. 4 is a diagram illustrating a method of driving an autofocus function using a plurality of cameras in an electronic device, according to an embodiment.
FIG. 5 is a diagram illustrating operations of providing an autofocus function in an electronic device, according to a comparative example.
FIG. 6 is a diagram illustrating operations of providing an autofocus function in an electronic device, according to an embodiment.
FIG. 7 is a flowchart illustrating an operating method of an electronic device, according to an embodiment.
FIG. 8 is a flowchart illustrating a method for controlling autofocus based on distance information in an electronic device, according to an embodiment.
FIG. 9 is a flowchart illustrating an operating method of an electronic device according to an embodiment.

In relation to descriptions of the drawings, like or similar reference numerals may be used for like or similar components.

### [Mode for the Invention]

Hereinafter, various embodiments disclosed in this document will be described with reference to the attached drawings. It should be understood that this is not intended to limit the various embodiments of this document to specific forms, but includes various modifications, equivalents, and/or alternatives of the disclosure.

To provide an auto focus (AF) function of a camera, it is necessary to quickly and accurately calculate a focal length and to drive a mechanism. An electronic device such as a smartphone may automatically focus on a subject using a range sensor or a depth camera for measuring a distance to the subject (or an object). In general, after a camera application is executed and preview images are received from one or more cameras, the electronic device may perform the AF function by calculating a focus position based on the measured distance to the subject and moving the camera lens based on the calculated focus position. In so doing, an initial position to which the focus of the camera lens moves may be set to a final focus position which is set during a previous use, or to a default pan position (after a specific time passes). Hence, if the camera application is newly executed in a different shooting environment than before, the subject may be out of focus, which may take time to adjust it, and camera switching (e.g., switching from a wide camera to an ultra-wide camera) or a focus change in the focus adjustment may cause visual screen wobbling, which may frustrate a user.

Various embodiments of this document may provide various embodiments for reducing the time taken to automatically adjust the focus and user's inconvenience by obtaining distance information measured for the subject from the range sensor before displaying a preview image, and presetting the initial position of the focus based on the obtained distance information to thus automatically focus on the subject.

Technical tasks to be achieved in this document are not limited to the technical tasks mentioned above, and other technical tasks not mentioned will be clearly understood by those having ordinary knowledge in the technical field to which this document belongs.

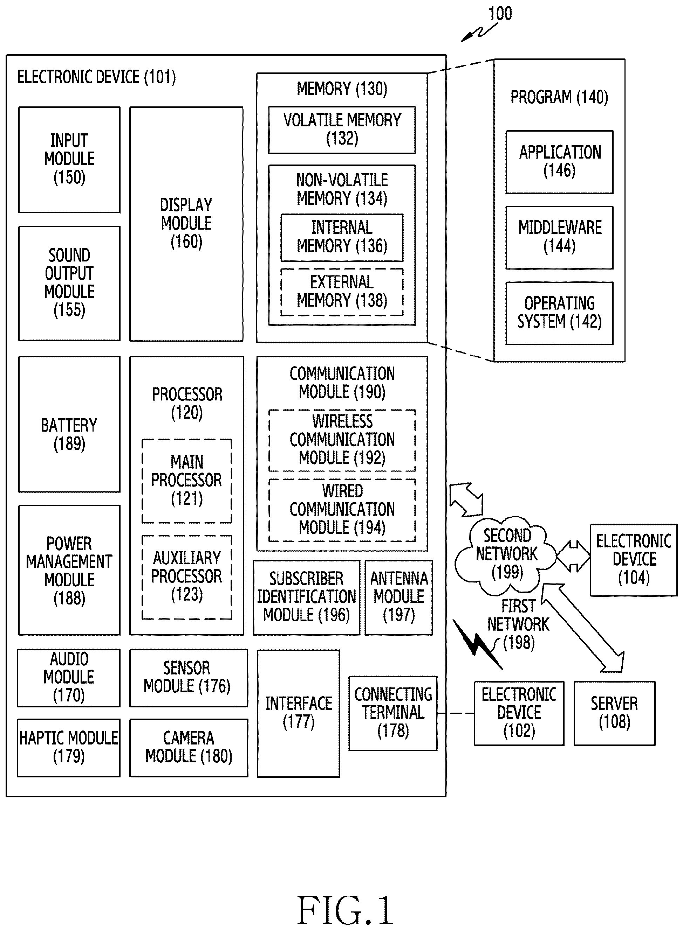

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

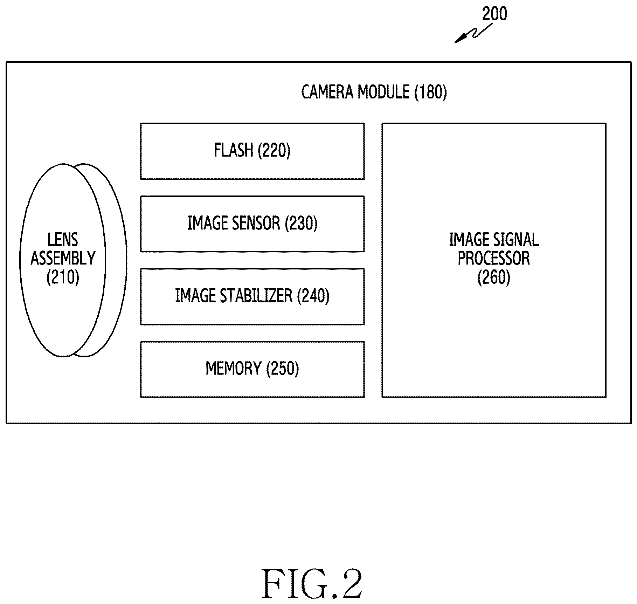

FIG. 2 is a block diagram 200 illustrating the camera module 180 according to various embodiments. Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

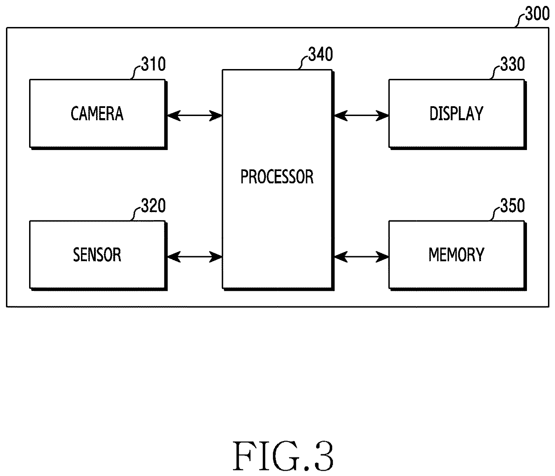

FIG. 3 is a diagram illustrating a configuration of an electronic device 300, according to an embodiment.

Referring to FIG. 3, the electronic device 300, which is a device for setting an initial focus of a camera based on distance information pre-acquired before displaying a preview image if capturing an image using an autofocus function, may include a plurality of cameras 310, one or more sensors 320, a display 330, at least one processor 340, or a memory 350. In FIG. 3, the electronic device 300 may correspond to the electronic device 101 shown in FIG. 1.

In an embodiment, the plurality of cameras 310 (e.g., the camera module 180 of FIG. 1) may capture a subject (or an object) according to a user's manipulation. For example, if a camera application is executed, the plurality of cameras 310 may automatically focus on the subject based on distance information measured for the subject, and acquire a captured image based on the set focus. According to various embodiments, the electronic device 300 may include the plurality of cameras having different focal lengths.

In an embodiment, the one or more sensors 320 (e.g., the sensor module 176 of FIG. 1) may measure the distance between the electronic device 300 (or the camera 310) and the subject. For example, the one or more sensors 320 may include a laser sensor, an ultrasonic sensor, an infrared ray sensor, a light detection and ranging (LIDAR) sensor, a time-of-flight (ToF) sensor (or a ToF camera), or any other various sensors for measuring the distance.

In an embodiment, the display 330 (e.g., the display module 160 of FIG. 1) may display images obtained from the plurality of cameras 310. For example, if the camera application is executed, the display 330 may display preview images acquired from the plurality of cameras 310.

In an embodiment, the display 330 may include at least one or more of a liquid crystal display (LCD), a thin film transistor (TFT)-LCD, organic light emitting diodes (OLED), a light emitting diode (LED), an active matrix organic LED (AMOLED), a flexible display, and a 3-dimension display. In addition, some of these displays may be configured as a transparent or light-transmitting type to view therethrough. This may be configured in the form of a transparent display including a transparent OLED (TOLED).

In an embodiment, the memory 350 (e.g., the memory 130 of FIG. 1) may store instructions, when executed, for controlling the at least one processor 340 (e.g., the processor 120 of FIG. 1) to perform various operations. For example, the at least one processor 340 may perform operations for setting the initial focus based on the distance information for the object and then providing the preview image.

In an embodiment, the at least one processor 340 may receive an input for starting execution of the camera application. For example, the at least one processor 340 may identify receiving the input for starting the execution of the camera application based on a touch input or a voice input of the user.

In an embodiment, after the input is received, the at least one processor 340 may obtain the distance information for the object from the one or more sensors 320, before the preview images are displayed by the execution of the camera application. According to various embodiments, in response to the input for starting the camera application execution, the one or more sensors 320 may be controlled to identify the object located within a designated distance and to measure the distance from the electronic device 300 to the object. The one or more sensors 320 may include a laser sensor, an ultrasonic sensor, an infrared ray sensor, a LIDAR sensor, a TOF sensor, or other various sensors for measuring the distance. For example, the one or more sensors 320 may generate a first signal with respect to a designated range. The first signal may be a signal generated by at least one of a laser, an ultrasonic, or a near-infrared ray. The one or more sensors 320 may identify the object in response to receiving a reflection signal for the first signal, and measure the distance to the object based on the reflection signal.

In an embodiment, the at least one processor 340 may select a camera for capturing an image of the object from the plurality of cameras 310 based on the distance information acquired for the object. The at least one processor 340 may determine an appropriate focal length (or an angle of view) for capturing the image of the object by considering the distance to the object, and select a camera corresponding to the determined focal length (or angle of view). For example, if the distance information corresponds to a distance suitable for an ultra-wide camera among a wide camera and the ultra-wide camera, the at least one processor 340 may select the ultra-wide camera to capture images displayed as the preview images in displaying an execution screen of the camera application. As another example, if the distance information corresponds to a distance suitable for a telephoto camera among the wide camera and the telephoto camera, the at least one processor 340 may select the telephoto camera to capture images displayed as preview images in displaying the execution screen of the camera application.

In an embodiment, the at least one processor 340 may identify an initial focus position of the selected camera based on the distance information acquired for the object. The at least one processor 340 may control the selected camera to automatically focus on the object based on the identified initial focus position, before displaying the preview images.

In an embodiment, if the acquired distance information is smaller than a first distance value, the at least one processor 340 may select a first camera for autofocusing with respect to a distance range falling below the first distance value among the plurality of cameras 310, and control to move a lens of the first camera in response to the identified initial focus position. For example, if identifying the object located within 28 cm using the one or more sensors 320, the at least one processor 340 may control the AF function using the ultra wide camera appropriate for the shooting within 28 cm.

In an embodiment, if the acquired distance information is greater than or equal to the first distance value and smaller than a second distance value, the at least one processor 340 may select a second camera for autofocusing with respect to a distance range greater than or equal to the first distance value and below the second distance value among the plurality of cameras 310, and control to move a lens of the second camera in response to the identified initial focus position. For example, if identifying the object located in a distance range greater than or equal to 28 cm or and below 1.5 m, the at least one processor 340 may control driving for the AF using the wide camera suitable for the shooting in the corresponding distance range. As another example, if identifying the object in a distance range greater than or equal to 1.5 m and less than 4 m, the at least one processor 340 may control driving for the AF using the telephoto camera suitable for the shooting in the corresponding distance range.

In an embodiment, if the acquired distance information is equal to or greater than the second distance value or the distance to the object is not identified, the at least one processor 340 may select a default camera among the plurality of cameras 310 and control a lens of the selected camera to move in response to an infinity focus (e.g., pan-focus) position. For example, if the default camera is the wide camera in the electronic device 300, the at least one processor 340 may control driving for the AF based on the infinity focus position of the wide camera. According to various embodiments, reference distance values (or reference distance ranges) for selecting the camera may be set differently depending on the number of the plurality of cameras 310 included in the electronic device 300 and/or specifications of each camera.

In an embodiment, the at least one processor 340 may display a preview image including the object on the display 330 based on the initial focus position of the selected camera. The at least one processor 340 may provide an image acquired through an image sensor of the selected camera as the preview image while the lens of the selected camera is moved in response to the initial focus position.

According to various embodiments, the at least one processor 340 may perform the autofocusing before providing the preview image, only if no movement of the electronic device 300 is detected upon receiving an input for executing the camera application. For example, before the preview image is displayed by executing the camera application after the input is received, the at least one processor 340 may detect a movement of the electronic device using an acceleration sensor, a gyro sensor, or other various sensors for detecting the movement. If the detected movement of the electronic device 300 falls below a designated threshold level, the at least one processor 340 may control to measure the distance to the object using the one or more sensors 320.

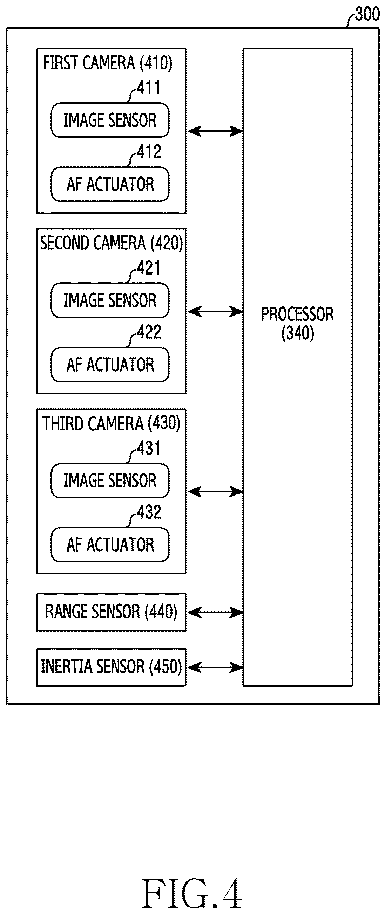

FIG. 4 is a diagram illustrating how to drive an AF function using a plurality of cameras 310 in an electronic device 300, according to an embodiment. In FIG. 4, a first camera 410, a second camera 420 or a third camera 430 are exemplary configurations of the plurality of cameras 310 shown in FIG. 3, and the number of cameras included in the electronic device 300 may not be limited thereto. A range sensor 440 is a means for detecting an object located within a designated distance and measuring a distance to the object, and may correspond to the one or more sensors 320 shown in FIG. 3. According to various embodiments, the electronic device 300 may further include an inertia sensor 450 for detecting its movement. The inertia sensor 450 may detect whether a movement over a designated level occurs in the electronic device 300.

Referring to FIG. 4, if an input for starting camera application execution is received, the at least one processor 340 may control the range sensor 440 to measure a distance between the electronic device 300 and the object. The range sensor 440 may include a laser sensor, an ultrasonic sensor, an infrared ray sensor, a LIDAR sensor, a TOF sensor, or other various sensors for measuring a distance. The range sensor 440 may measure the distance to the object using a ToF scheme, a time difference of arrival (TDoA) scheme, or at least one other scheme for measuring the distance to the object. According to various embodiments, the range sensor 440 may maintain an enabled state to continuously identify the distance to the object while the camera application is executed after the input for the camera application execution is received.

According to various embodiments, the at least one processor 340 may perform distance measurement for an object only if there is no movement above a designated level in the electronic device 300. In response to the input for starting the camera application execution, the at least one processor 340 may obtain data related to the movement of the electronic device 300 from the inertia sensor 450. The inertia sensor 450 may include an acceleration sensor for measuring acceleration in x-axis, y-axis, and z-axis directions and a gyro sensor for measuring a rotational change amount (an angular velocity). The at least one processor 340 may determine whether a movement above the designated level occurs in the electronic device 300 based on the data related to the movement obtained from the inertia sensor 450, and may not perform the distance measurement operations for the object using the range sensor 440 if the movement above the designated level occurs in the electronic device 300 according to the determination result. If identifying no movement in the electronic device 300 or the movement detected by the inertia sensor 450 below the designated level, the at least one processor 300 may measure the distance to the object using the range sensor 440.

In an embodiment, the at least one processor 340 may select a camera for capturing an image of the object based on the distance information obtained from the range sensor 440. The at least one processor 340 may determine an appropriate focal length for capturing an image of the object based on the distance measured for the object, and select a camera corresponding to the determined focal length. For example, in macro photography, the at least one processor 340 may identify an object located within a specific distance using the one or more sensors 320, and select the ultra wide camera suitable for the macro photography. As another example, if capturing an object located at a distance of about 1 m away from the electronic device 300, the at least one processor 340 may select the wide camera suitable for the shooting for the 1 m-distance.

In an embodiment, if selecting the first camera 410, the at least one processor 340 may determine an initial focus position of the first camera 410 based on the distance information. The at least one processor 340 may transmit the determined initial focus position of the first camera 410 to an image sensor 411 and an AF actuator 412 of the first camera 410. The AF actuator 412 may move the lens of the first camera 410 corresponding to the determined initial focus position. The image sensor 411 may provide as preview images, images acquired after the lens of the first camera 410 is moved by the AF actuator 412 in response to the initial focus position. According to various embodiments, the lens of the first camera 410 may be also moved under control of the image sensor 411.

In an embodiment, if selecting the second camera 420, the at least one processor 340 may determine an initial focus position of the second camera 420 based on the distance information. The at least one processor 340 may transmit the determined initial focus position of the second camera 420 to an image sensor 421 and an AF actuator 422 of the second camera 420. The AF actuator 422 may move the lens of the second camera 420 corresponding to the determined initial focus position. The image sensor 421 may provide as preview images, images acquired after the lens of the second camera 420 is moved by the AF actuator 422 in response to the initial focus position. According to various embodiments, the lens of the second camera 420 may be also moved under control of the image sensor 421.

In an embodiment, if selecting the third camera 430, the at least one processor 340 may determine an initial focus position of the third camera 430 based on the distance information. The at least one processor 340 may transmit the determined initial focus position of the third camera 430 to an image sensor 431 and an AF actuator 432 of the third camera 430. The AF actuator 432 may move a lens of the third camera 430 in response to the determined initial focus position. The image sensor 431 may provide as preview images, images acquired after the lens of the third camera 430 is moved by the AF actuator 432 in response to the initial focus position. According to various embodiments, the lens of the third camera 430 may be also moved under control of the image sensor 431.

According to various embodiments, if the distance measurement to the object is impossible or the object is not identified using the range sensor 440, the at least one processor 340 may set the initial focus using the default camera among the first camera 410, the second camera 420 or the third camera 430. For example, if the first camera 410 is set as the default camera in the electronic device 300, the at least one processor 340 may control to set the initial focus based on the infinity focus position of the first camera 410. The AF actuator 412 may drive to position the lens of the first camera 410 corresponding to the infinity focus position of the first camera 410. The image sensor 411 may provide as preview images, images acquired after the lens of the first camera 410 is moved by the AF actuator 412 to a position corresponding to the infinity focus position of the first camera 410. According to various embodiments, the lens of the first camera 410 may be also moved under control of the image sensor 411.

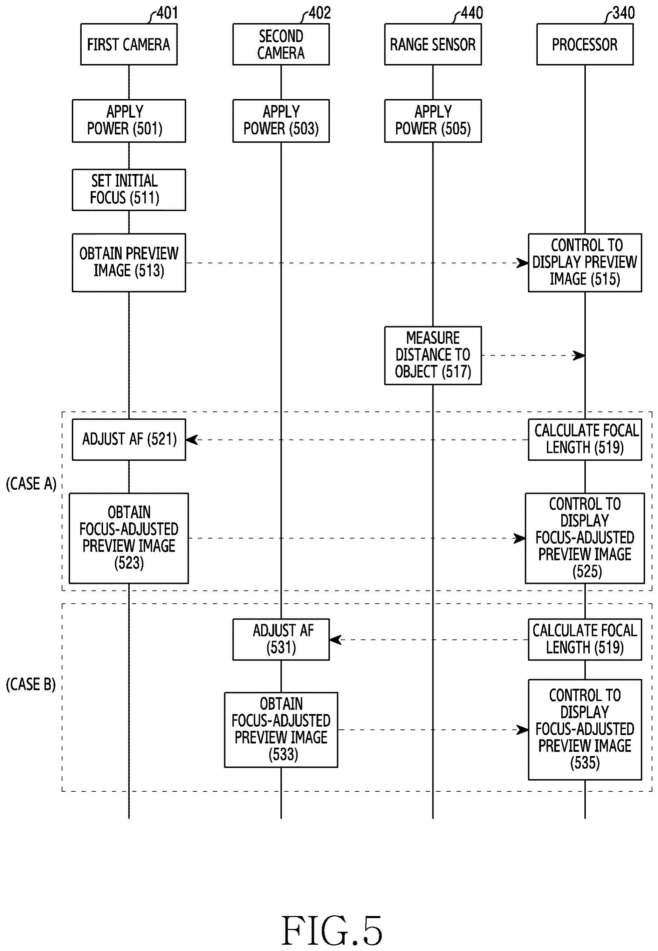

FIG. 5 is a diagram illustrating operations for providing an AF function in an electronic device 300, according to a comparative example. In the comparative example of FIG. 5, the first camera 401 and the second camera 402 may correspond to any one of a plurality of cameras (e.g., the camera module 180 of FIG. 1, the plurality of cameras 310 of FIG. 3, or the first through third cameras 410, 420, and 430 of FIG. 4) included in the electronic device 300. FIG. 5 illustrates the plurality of cameras 310 as the first camera 401 and the second camera 402, but the number of cameras included in the electronic device 300 is not limited thereto and may be added according to the specifications of the electronic device 300. In the comparative example, the range sensor 440 detects an object located within a designated distance and measures a distance to the object, and may correspond to the sensor module 176 of FIG. 1, the one or more sensors 320 of FIG. 3 or the range sensor 440 of FIG. 4. In the comparative example, the at least one processor 340 controls overall operations performed in the electronic device 300 in response to the camera application execution, and may correspond to the processor 120 of FIG. 1, or the at least one processor 340 of FIG. 3 and FIG. 4.

Referring to FIG. 5, if the camera application is executed, power may be supplied to the first camera 401, the second camera 402 and/or the range sensor 440 to enable them (operation 501, operation 503, operation 505).

According to the comparative example, the initial focus may be set by the first camera 401 in operation 511. In the comparative example, if the AF function of the camera is activated, the first camera 401 may automatically set the initial focus for an object located within a designated distance. At this time, a position where the initial focus is set may correspond to a final focus position of a previously executed camera application (i.e., a focus position set at the time of termination) or the default pan position.

According to the comparative example, in operation 513, the first camera 401 may obtain a preview image based on the initial focus. In the comparative example, an image formed on the image sensor of the first camera 401 based on the initial focus after the camera application is executed may be provided as the preview image.

According to the comparative example, in operation 515, the at least one processor 340 may control to display the preview image obtained from the first camera 401 on the display (e.g., the display module 160 of FIG. 1 or the display 330 of FIG. 3) of the electronic device 300.

According to the comparative example, in operation 517, the range sensor 440 may measure the distance to the object. The range sensor 440 may measure the distance between the electronic device 300 and the object using the ToF scheme, the TDoA scheme, or at least one other scheme for measuring the distance to the object.

According to the comparative example, in operation 519, the at least one processor 340 may calculate a focus position for the object based on the distance to the object obtained from the range sensor 440. In operation 519, the at least one processor 340 may select at least one camera having an appropriate focal length to capture the object based on the distance to the object, and determine the focus position of the at least one camera. The at least one processor 340 may transmit the calculated focus position to the selected camera. Operations of the electronic device 300 may be divided into CASE A (operation 521 through operation 525) or CASE B (operation 531 through operation 535) depending on the camera selection of the at least one processor 340. According to the comparative example, if the first camera 401 is selected the same as the camera (the first camera) which sets the initial focus in operation 519, operations corresponding to CASE A (operation 521 through operation 525) may be performed. According to the comparative example, in operation 521, the first camera 401 may automatically adjust the focus based on the calculated focus position while displaying the preview image. The first camera 401 may move the lens in response to the calculated focus position.

According to the comparative example, in operation 523, the first camera 401 may obtain a preview image with the focus adjusted based on the calculated focus position. In the comparative example, the lens of the first camera 401 is moved in response to the calculated focus position while the preview image is provided, and then an image formed on the image sensor of the first camera 401 may be continuously provided as a preview image subsequent to the preview image of operation 513. If the calculated focus position is different from the initial focus position automatically set in operation 511, screen blurring may be observed due to the focus adjustment of the first camera 401 while the preview image is provided.

In the comparative example, the at least one processor 340 may control to display the focus-adjusted preview image obtained from the first camera 401 on the display 330 of the electronic device 300 in operation 525. In the comparative example, operation 519 through operation 525 may be repeatedly performed while the camera application is running.

According to the comparative example, if the second camera 402 different from the camera (e.g., the first camera 401) which sets the initial focus in operation 519 is selected, operations corresponding to CASE B (operation 531 through operation 535) may be performed. According to the comparative example, in operation 531, the camera focusing on the object may be changed from the first camera 401 to the second camera 402. In operation 531, the second camera 402 may obtain data related to the calculated focus position from the at least one processor 340, and automatically adjust the focus based on the calculated focus position while displaying the preview image.

According to the comparative example, in operation 533, the second camera 402 may obtain a preview image with the focus adjusted based on the calculated focus position. In the comparative example, the lens of the second camera 402 may be moved in response to the calculated focus position while providing the preview image, and then an image formed on the image sensor of the second camera 402 may be continuously provided as a preview image subsequent to the preview image of operation 513. In so doing, screen blurring may be observed due to the change of the camera focusing on the object while the preview image is provided.

According to the comparative example, the at least one processor 340 may control to display the focus-adjusted preview image obtained from the second camera 402 on the display 330 of the electronic device 300 in operation 535. In the comparative example, operation 519 through operation 535 may be repeatedly performed while the camera application is running.

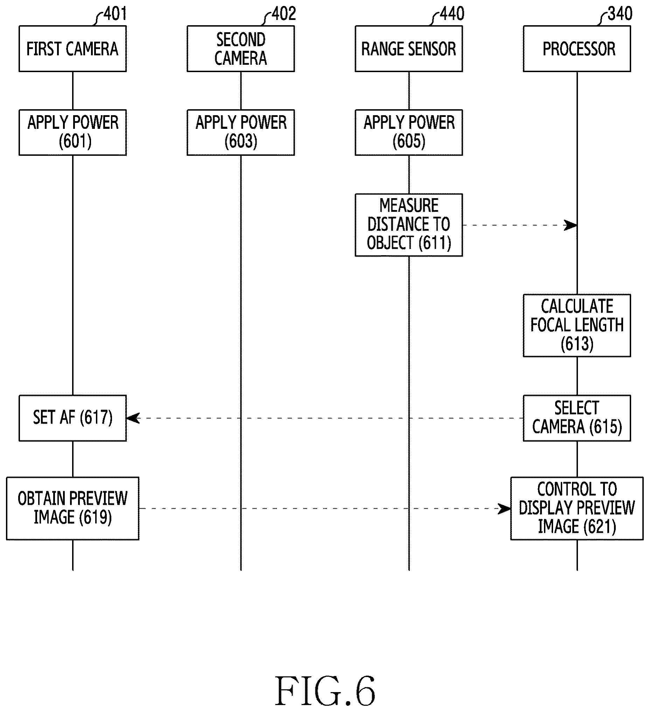

FIG. 6 is a diagram illustrating operations for providing an AF function in an electronic device, according to an embodiment. In the embodiment of FIG. 6, the first camera 401 and the second camera 402 may correspond to any one of a plurality of cameras (e.g., the camera module 180 of FIG. 1, the plurality of cameras 310 of FIG. 3, or the first through third cameras 410, 420, and 430 of FIG. 4) included in the electronic device 300. FIG. 6 illustrates the plurality of cameras 310 as the first camera 401 and the second camera 402, but the number of cameras included in the electronic device 300 is not limited thereto and may be added depending on the specifications of the electronic device 300. In an embodiment, the range sensor 440 detects an object located within a designated distance and measures a distance to the object, and may correspond to the sensor module 176 of FIG. 1, the one or more sensors 320 of FIG. 3 or the range sensor 440 of FIG. 4. In an embodiment, the at least one processor 340 controls overall operations performed in the electronic device 300 in response to an input for executing the camera application, and may correspond to the processor 120 of FIG. 1, or the at least one processor 340 of FIG. 3 and FIG. 4.

Referring to FIG. 6, if an input for starting camera application execution is received, power may be supplied to the first camera 401, the second camera 402 and/or the range sensor 440 to enable them (operation 601, operation 603, operation 605).

According to an embodiment, in operation 611, the range sensor 440 may identify the object located within the designated distance from the electronic device 300 and measure a distance to the identified object, before the preview image is displayed by the camera application execution after the input is received. The range sensor 440 may measure the distance between the electronic device 300 and the object using the ToF scheme, the TDoA scheme, or at least one other scheme for measuring the distance to the object.

According to an embodiment, in operation 613, the at least one processor 340 may calculate a focus position for the object based on the distance to the object obtained from the range sensor 440. The at least one processor 340 may determine at least one camera having an appropriate focal length to capture the object based on the distance to the object, and the focus position of the at least one camera in operation 613.

According to an embodiment, in operation 615, the at least one processor 340 may select a camera for capturing an image of the object based on the calculated focal position. For example, the at least one processor 340 may select the first camera 401 determined to have an appropriate focal length to capture the image of the object among the first camera 401 or the second camera 402. The at least one processor 340 may transmit the calculated focal position to the first camera 401.

According to an embodiment, in operation 617, the first camera 401 may automatically adjust the focus based on the calculated focus position. The AF actuator of the first camera 401 may move the lens (e.g., the lens assembly 210 of FIG. 2) of the first camera 401 in response to the calculated focus position, before displaying the preview image. According to various embodiments, the lens of the first camera 401 may be also moved under the control of the image sensor (e.g., the image sensor 230 of FIG. 2) of the first camera 401, in response to the calculated focus position.

According to an embodiment, in operation 619, the first camera 401 may obtain a preview image with the focus adjusted based on the calculated focus position. The first camera 401 may provide as the preview image, an image obtained after the lens of the first camera 401 is moved in response to the calculated focus position.

According to an embodiment, in operation 621, the at least one processor 340 may control to display the preview image obtained from the first camera on the display (e.g., the display module 160 of FIG. 1 or the display 330 of FIG. 3) of the electronic device 300. According to various embodiments, operation 611 through operation 621 may be repeatedly performed while the execution of the camera application is maintained.

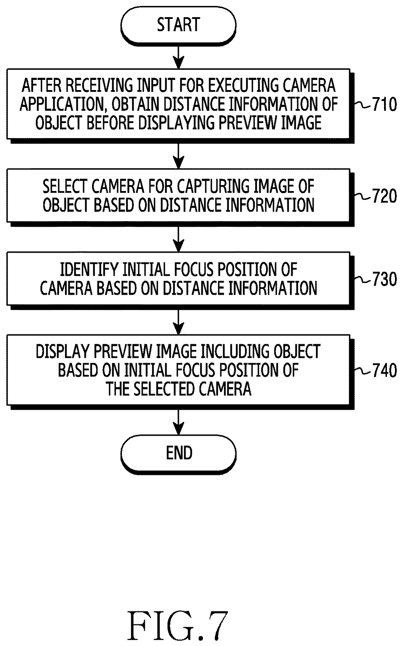

FIG. 7 is a flowchart illustrating an operating method of an electronic device 300, according to an embodiment. According to an embodiment, the electronic device 300 is a device which sets an initial focus of a camera based on distance information acquired in advance before displaying a preview image if capturing an image using an AF function, and may correspond to the electronic device 101 shown in FIG. 1. Operations of FIG. 7 may be carried out by a processor (e.g., the processor 120 of FIG. 1 or the at least one processor 340 of FIG. 3) included in the electronic device 300.

Referring to FIG. 7, in operation 710, before a preview image is displayed by the execution of the camera application after an input for executing a camera application is received, the electronic device 300 may obtain distance information of an object through a sensor (e.g., the sensor module 176 of FIG. 1, the one or more sensors 320 of FIG. 3 or the range sensor 440 of FIG. 4). According to various embodiments, the sensors 320 may include a laser sensor, an ultrasonic sensor, an infrared ray sensor, a LIDAR sensor, a TOF sensor, or other various sensors for measuring the distance. In operation 710, the electronic device 300 may, in response to the input to start the camera application execution, identify the object located within a designated distance from the electronic device 300 and control the one or more sensors 320 to measure the distance between the electronic device 300 and the object.

According to various embodiments, in operation 710, the electronic device 300 may generate a first signal for a designated range using the one or more sensors 320 and identify the object in response to receiving a reflection signal for the first signal. The electronic device 300 may measure the distance to the object based on the reflection signal received using the one or more sensors 320.

According to an embodiment, in operation 720, the electronic device 300 may determine a camera for capturing an image of the object among a plurality of cameras (e.g., the camera module 180 of FIG. 1, the plurality of cameras 310 of FIG. 3, or the first through third cameras 410, 420, and 430 of FIG. 4) based on the distance information acquired for the object. In operation 720, the electronic device 300 may determine an appropriate focal length (or angle of view) for capturing the image of the object by considering the distance to the object, and select at least one camera corresponding to the determined focal length (or angle of view). For example, if the distance information corresponds to a distance appropriate for the ultra-wide camera among the wide camera and the ultra-wide camera, the electronic device 300 may select the ultra-wide camera to capture images displayed as preview images in displaying the execution screen of the camera application. As another example, if the distance information corresponds to a distance suitable for the telephoto camera among the wide camera and the telephoto camera, the electronic device 300 may select the telephoto camera to capture images displayed as preview images in displaying the execution screen of the camera application.

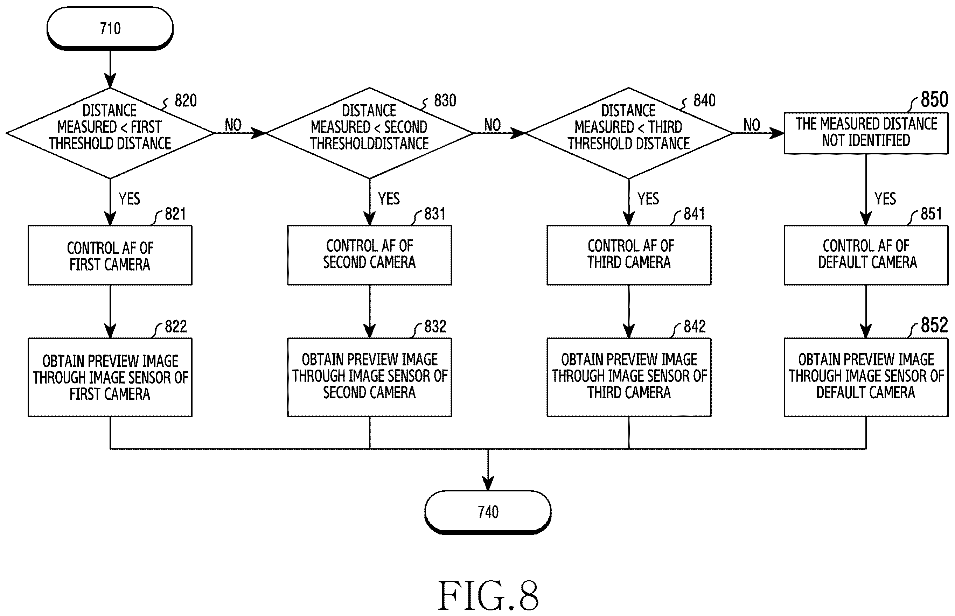

According to an embodiment, in operation 730, the electronic device 300 may identify an initial focus position of the at least one selected camera based on the distance information acquired for the object. Before displaying the preview images, the electronic device 300 may cause the at least one selected camera to automatically focus on the object based on the identified initial focus position. Specific details on the AF control based on the camera selection of operation 720 and the initial focus position identification of operation 730 according to various embodiments shall be described with reference to FIG. 8.

FIG. 8 is a flowchart illustrating a method for controlling AF based on distance information in an electronic device, according to an embodiment. Referring to FIG. 8, if obtaining the distance information of the object in operation 710, the electronic device 300 may determine whether the distance measured for the object falls below a first threshold distance based on the distance information in operation 820. If the measured distance falls below the first threshold distance (operation 820-Yes) according to the determination result, the electronic device 300 may select the first camera for autofocusing in a distance range below the first threshold distance among the plurality of cameras 310. According to an embodiment, the electronic device 300 may control the AF function of the selected first camera in operation 821. In operation 821, the electronic device 300 may identify the initial focus position of the first camera based on the obtained distance information, and control to move the lens of the first camera in response to the identified initial focus position. According to an embodiment, the electronic device 300 may obtain a preview image through the image sensor of the first camera in operation 822. For example, if identifying the object located within 28 cm, the electronic device 300 may control driving for the AF using the ultra wide camera suitable for the shooting within 28 cm, and obtain a preview image through the image sensor of the ultra wide camera.

If the measured distance is greater than or equal to the first threshold distance (operation 820-No) as a result of the determination, the electronic device 300 may determine based on the distance information whether the measured distance for the object falls below a second threshold distance in operation 830. If the measured distance falls below than the second threshold distance (operation 830-Yes) according to the determination result, the electronic device 300 may select the second camera for autofocusing in a distance range which is greater than or equal to the first threshold distance and falls below the second threshold distance among the plurality of cameras 310. According to an embodiment, the electronic device 300 may control the AF function of the selected second camera in operation 831. In operation 831, the electronic device 300 may identify the initial focus position of the second camera based on the acquired distance information, and control to move the lens of the second camera in response to the identified initial focus position. According to an embodiment, the electronic device 300 may obtain a preview image through the image sensor of the second camera in operation 832. For example, if identifying the object located within a distance range of 28 cm or more and below 1.5 m, the electronic device 300 may control driving for the AF using the wide camera suitable for the shooting within the corresponding distance range, and obtain a preview image through the image sensor of the wide camera.

If the measured distance is greater than or equal to the second threshold distance (operation 830-No) based on the determination result, the electronic device 300 may determine whether the measured distance for the object falls below a third threshold distance based on the distance information in operation 840. If the measured distance falls below the third threshold distance (operation 840-Yes) based on the determination result, the electronic device 300 may select the third camera for autofocusing in a distance range which is greater than or equal to the second threshold distance and falls below the third threshold distance among the plurality of cameras 310. According to an embodiment, the electronic device 300 may control the AF function of the selected third camera in operation 841. In operation 841, the electronic device 300 may identify the initial focus position of the third camera based on the acquired distance information, and control to move the lens of the third camera in response to the identified initial focus position. According to an embodiment, the electronic device 300 may obtain a preview image through the image sensor of the third camera in operation 842. For example, if identifying the object located within a distance range of 1.5 m or more and below 4 m, the electronic device 300 may control driving for the AF using the telephoto camera suitable for the shooting within the corresponding distance range, and obtain a preview image through the image sensor of the telephoto camera.

If the measured distance is not identified based on the determination result, or if the measured distance is equal to or greater than the third threshold distance (operation 840-No), the electronic device 300 may determine that the measured distance for the object is meaningless in operation 850. In this case, the electronic device 300 may select the default camera among the plurality of cameras 310. The electronic device 300 may control the AF function of the selected default camera in operation 851. In operation 851, the electronic device 300 may control to move the lens of the default camera in response to the infinity focus position of the default camera based on the acquired distance information. According to an embodiment, the electronic device 300 may acquire a preview image through the image sensor of the default camera in operation 852. For example, if the default camera is the wide camera in the electronic device 300, the electronic device 300 may control driving for the AF based on the infinity focus position of the wide camera. According to various embodiments, the reference distance values (or the reference distance ranges) for selecting the camera may be set differently depending on the number of the plurality of cameras 310 included in the electronic device 300 and/or the specifications of each camera.

Referring back to FIG. 7, in operation 740, the electronic device 300 may display the preview image including the object on the display (e.g., the display module 160 of FIG. 1 or the display 330 of FIG. 3) based on the initial focus position of the selected camera. In operation 740, the electronic device 300 may provide as the preview image, an image acquired through the image sensor of the selected camera while the lens of the selected camera is moved in response to the initial focus position.

According to various embodiments, the electronic device 300 may perform operation 710 through operation 740 only if a movement of the electronic device 300 is not detected upon receiving the input for executing the camera application. For example, if receiving the input for starting the camera application execution, the electronic device 300 may detect a movement of the electronic device using an acceleration sensor, a gyro sensor, or other various sensors for detecting the movement. If the identified movement of the electronic device 300 falls below a designated threshold level, the electronic device 300 may control to measure the distance to the object using the one or more sensors 320.

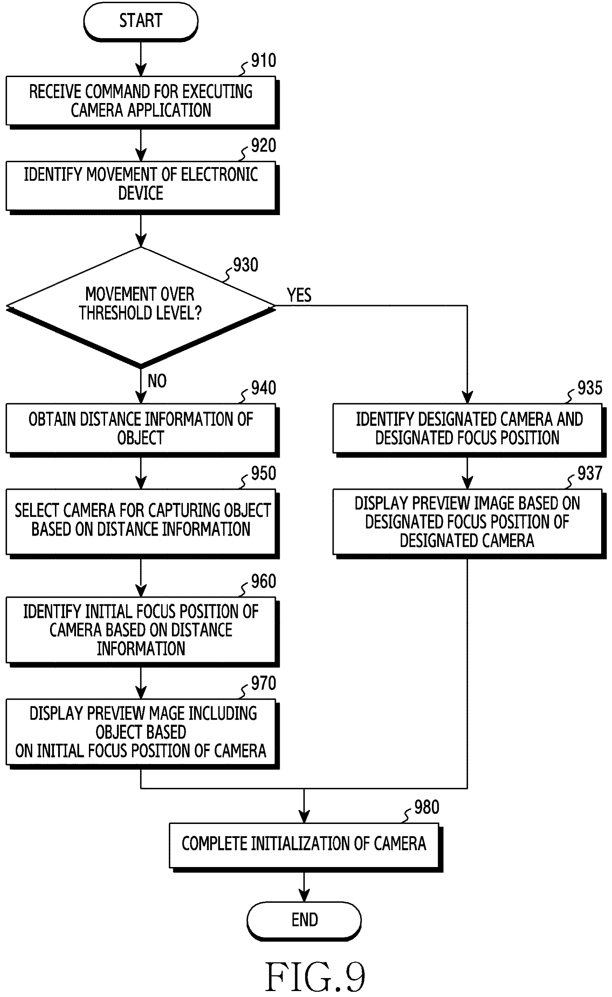

FIG. 9 is a flowchart illustrating an operating method of an electronic device 300 according to an embodiment. According to an embodiment, the electronic device 300 is a device which sets an initial focus of a camera based on distance information acquired in advance before displaying a preview image if capturing an image using an AF function, and may correspond to the electronic device 101 shown in FIG. 1. Operations of FIG. 9 may be carried out by a processor (e.g., the processor 120 of FIG. 1 or the at least one processor 340 of FIG. 3) included in the electronic device 300.

Referring to FIG. 9, in operation 910, the electronic device 300 may receive a command (a user input) for starting execution of the camera application. The electronic device 300 may receive the command (the user input) based on a user's touch input or voice input.

According to an embodiment, in operation 920, the electronic device 300 may identify a movement of the electronic device 300, in response to the command (the user input) for starting the camera application execution. For example, the electronic device 300 may obtain data related to the movement of the electronic device 300 from an inertia sensor (e.g., the inertia sensor 450 of FIG. 4). The inertia sensor 450 may include an acceleration sensor for measuring acceleration in the x-axis, y-axis, and z-axis directions and a gyro sensor for measuring a rotational change amount (angular velocity).

According to an embodiment, in operation 930, the electronic device 300 may determine whether the movement over a threshold level occurs in the electronic device 300 based on the movement data obtained from the inertia sensor 450.

If the movement over the threshold level occurs in the electronic device 300 (operation 930-Yes) according to the determination result, the electronic device 300 may not perform the AF function based on the distance measurement to the object, but may determine the initial focus position according to a designated setting. The electronic device 300 may identify a designated camera and a designated focus position for capturing the object in operation 935. For example, the designated camera may correspond to the default camera among the plurality of cameras (e.g., the camera module 180 of FIG. 1, the plurality of cameras 310 of FIG. 3, or the first through third cameras 410, 420, and 430 of FIG. 4) included in the electronic device 300. The designated focus position may correspond to the infinity focus (e.g., pan-focus) position of the default camera. The electronic device 300 may display a preview image based on the designated focus position of the designated camera in operation 937, and complete the initialization of the camera in operation 980. After operation 980, the electronic device 300 may maintain the state for capturing the object based on the designated focus position of the designated camera, while the camera application is running.

If the movement below the threshold level occurs in the electronic device 300 (operation 930-No) according to the determination result, the electronic device 300 may obtain distance information of the object through a sensor (e.g., the sensor module 176 of FIG. 1, the one or more sensors 320 of FIG. 3 or the range sensor 440 of FIG. 4) in operation 940. According to various embodiments, the sensors 320 may include a laser sensor, an ultrasonic sensor, an infrared ray sensor, a LIDAR sensor, or other various sensors for measuring the distance. In operation 940, the electronic device 300 may identify the object located within a designated distance from the electronic device 300 using the sensors 320, and measure the distance between the electronic device 300 and the object.

According to an embodiment, in operation 950, the electronic device 300 may select a camera for capturing an image of the object among the plurality of cameras based on the distance information obtained for the object. In operation 950, the electronic device 300 may determine an appropriate focal length (or angle of view) to capture an image of the object by considering the distance to the object, and select a camera corresponding to the determined focal length (or angle of view).

According to an embodiment, in operation 960, the electronic device 300 may identify an initial focus position of the selected camera based on the distance information acquired for the object. Before displaying a preview image by executing the camera application after receiving the command (the user input), the electronic device 300 may cause the selected camera to automatically focus on the object based on the identified initial focus position. According to various embodiments, specific details on the camera selection of operation 950 and the initial focus position identification of operation 960 may correspond to the operations explained in FIG. 8.

According to an embodiment, in operation 970, the electronic device 300 may display the preview image including the object on the display (e.g., the display module 160 of FIG. 1 or the display 330 of FIG. 3) based on the initial focus position of the selected camera. In operation 970, the electronic device 300 may provide as the preview image, an image acquired through the image sensor of the selected camera while the lens of the selected camera is moved in response to the initial focus position. The electronic device 300 may complete the initialization of the camera in operation 980. After operation 980, the electronic device 300 may maintain the state for capturing the object based on the initial focus position determined for the at least one camera, while the camera application is running.

An electronic device (e.g., the electronic device 300) according to an embodiment may include a plurality of cameras 310 having different focal lengths, a sensor 320 for detecting a distance, a display 330, a processor 340, and a memory 350 for storing instructions, and the processor 340 may be configured to, if the instructions are executed, cause the electronic device 300 to receive an input for starting execution of a camera application, after receiving the input, obtain distance information of an object through the sensor 320, before displaying a preview image by the execution of the camera application, select a camera for capturing an image of the object from the plurality of cameras 310 based on the distance information, identify an initial focus position of the selected camera based on the distance information of the object, and display a preview image containing the object on the display 330 based on the initial focus position of the selected camera.

In an embodiment, the plurality of cameras 310 may include a wide camera and an ultra-wide camera, and the processor 340 may be configured to, if the instructions are executed, cause the electronic device 300 to, if the distance information acquired through the sensor corresponds to a distance suitable for the ultra-wide camera, select the ultra-wide camera to capture images displayed as the preview image in displaying an execution screen of the camera application.

In an embodiment, the plurality of cameras 310 may include a wide camera and a telephoto camera, and the processor 340 may be configured to, if the instructions are executed, cause the electronic device 300 to, if the distance information acquired through the sensor corresponds to a distance suitable for the telephoto camera, select the telephoto camera to capture images displayed as the preview image in displaying an execution screen of the camera application.

In an embodiment, the sensor 320 may include at least one of a laser sensor, an ultrasonic sensor, an infrared ray sensor, a LIDAR sensor or a TOF sensor.

In an embodiment, the sensor 320 may generate a first signal for a designated range, and identify the object in response to receiving a reflection signal for the first signal.

In an embodiment, the sensor 320 may measure a distance to the object based on the reflection signal for the first signal.

In an embodiment, the electronic device 300 may further include an inertia sensor 450 for detecting a movement of the electronic device, and the processor 340 may be configured to, if the instructions are executed, cause the electronic device 300 to, after receiving the input, identify the movement of the electronic device 300 using the inertia sensor 450, before displaying the preview image by the execution of the camera application, and, if the identified movement of the electronic device 300 falls below a designated threshold level, measure the distance to the object using the sensor 320.

In an embodiment, the inertia sensor 450 may include at least one of an acceleration sensor or a gyro sensor.

In an embodiment, the processor 340 may be configured to, if the instructions are executed, cause the electronic device 300 to provide as the preview image, an image acquired through an image sensor of the selected camera while a lens of the selected camera is moved in response to the initial focus position.

An operating method of an electronic device (e.g., the electronic device 300) according to an embodiment may include receiving an input for starting execution of a camera application, after receiving the input, obtaining distance information of an object through a sensor 320, before displaying a preview image by the execution of the camera application, selecting a camera for capturing an image of the object among a plurality of cameras 310 based on the distance information, determining an initial focus position of the selected camera based on the distance information for the object, and displaying a preview image containing the object on the display 330 based on the initial focus position of the selected camera.

In an embodiment, the plurality of cameras 310 may include a wide camera and an ultra-wide camera, and selecting the camera for capturing the image of the object may include, if the distance information acquired through the sensor corresponds to a distance suitable for the ultra-wide camera, selecting the ultra-wide camera to capture images displayed as the preview image in displaying an execution screen of the camera application.

In an embodiment, the plurality of cameras 310 may include a wide camera and a telephoto camera, and selecting the camera for capturing the image of the object may include, if the distance information acquired through the sensor corresponds to a distance suitable for the telephoto camera, selecting the telephoto camera to capture images displayed as the preview image in displaying an execution screen of the camera application.

In an embodiment, the sensor 320 may include at least one of a laser sensor, an ultrasonic sensor, an infrared ray sensor, a LIDAR sensor or a TOF sensor.

In an embodiment, the method may further include identifying the object using the sensor 320 in response to receiving a reflection signal for a first signal generated with respect to a designated range.

In an embodiment, the method may further include measuring a distance to the object using the sensor 320 based on the reflection signal for the first signal.

In an embodiment, the method may further include, after receiving the input, identifying a movement of the electronic device 300 using an inertia sensor 450, before displaying the preview image by the execution of the camera application, and if the identified movement of the electronic device 300 falls below a designated threshold level, measuring the distance to the object using the sensor 320.

In an embodiment, the inertia sensor 450 may include at least one of an acceleration sensor or a gyro sensor.

In an embodiment, displaying the preview image may include providing as the preview image, an image acquired through an image sensor of the selected camera while a lens of the selected camera is moved in response to the initial focus position.

In an embodiment, in a computer-readable recording medium for storing programs executable in a computer, the programs may be caused by the computer to receive an input for starting execution of a camera application, after receiving the input, obtain distance information of an object through a sensor, before displaying a preview image by the execution of the camera application, select a camera for capturing an image of the object among a plurality of cameras based on the distance information, determine an initial focus position of the selected camera based on the distance information for the object, and display a preview image containing the object based on the initial focus position of the selected camera.

Effects obtainable from the disclosure are not limited to the above-mentioned effects, and other effects which are not mentioned may be clearly understood by those skilled in the art of the disclosure.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," **"coupled to," "connected with,"** or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 300 comprising:
a plurality of cameras 310 having different focal lengths;
a sensor 320 for detecting a distance;
a display 330;
a processor 340; and
a memory 350 for storing instructions,
wherein the instructions, when executed by the processor 340, cause the electronic device 300 to,
receive an input for starting execution of a camera application,
after receiving the input, obtain distance information of an object through the sensor 320, before displaying a preview image by the execution of the camera application,
select a camera for capturing an image of the object from the plurality of cameras 310 based on the distance information,
identify an initial focus position of the selected camera based on the distance information of the object, and
display a preview image containing the object on the display 330 based on the initial focus position of the selected camera.

2. The electronic device of claim 1, wherein the plurality of cameras comprises a wide camera and an ultra-wide camera, and
the instructions, when executed by the processor 340, cause the electronic device 300 to,
if the distance information acquired through the sensor corresponds to a distance suitable for the ultra-wide camera, select the ultra-wide camera to capture images displayed as the preview image in displaying an execution screen of the camera application.

3. The electronic device of claim 1, wherein the plurality of cameras comprises a wide camera and a telephoto camera, and
the instructions, when executed by the processor 340, cause the electronic device 300 to,
if the distance information acquired through the sensor corresponds to a distance suitable for the telephoto camera, select the telephoto camera to capture images displayed as the preview image in displaying an execution screen of the camera application.

4. The electronic device of claim 1, wherein the sensor 320 comprises at least one of a laser sensor, an ultrasonic sensor, an infrared ray sensor, a light detection and ranging (LIDAR) sensor or a time of flight (TOF) sensor.

5. The electronic device of claim 4, wherein the sensor 320 generates a first signal for a designated range, identifies the object in response to receiving a reflection signal for the first signal, and measures a distance to the object based on the reflection signal for the first signal.

6. The electronic device of claim 1, further comprising:
an inertia sensor 450 for detecting a movement of the electronic device 300,
wherein the instructions, when executed by the processor 340, cause the electronic device 300 to,
after receiving the input, identify the movement of the electronic device 300 using the inertia sensor 450, before displaying the preview image by the execution of the camera application,
if the identified movement of the electronic device 300 falls below a designated threshold level, measure the distance to the object using the sensor 320, and
the inertia sensor 450 comprises at least one of an acceleration sensor or a gyro sensor.

7. The electronic device of claim 1, wherein the instructions, when executed by the processor 340, cause the electronic device 300 to,
provide as the preview image, an image acquired through an image sensor of the selected camera while a lens of the selected camera is moved in response to the initial focus position.

8. A method comprising:
receiving an input for starting execution of a camera application;
after receiving the input, obtaining distance information of an object through a sensor 320, before displaying a preview image by the execution of the camera application;
selecting a camera for capturing an image of the object among a plurality of cameras 310 based on the distance information;
identifying an initial focus position of the selected camera based on the distance information for the object; and
displaying a preview image containing the object on the display 330 based on the initial focus position of the selected camera.

9. The method of claim 8, wherein the plurality of cameras comprises a wide camera and an ultra-wide camera, and
selecting the camera for capturing the image of the object comprises,
if the distance information acquired through the sensor corresponds to a distance suitable for the ultra-wide camera, selecting the ultra-wide camera to capture images displayed as the preview image in displaying an execution screen of the camera application.

10. The method of claim 8, wherein the plurality of cameras comprises a wide camera and a telephoto camera, and
selecting the camera for capturing the image of the object comprises,
if the distance information acquired through the sensor corresponds to a distance suitable for the telephoto camera, selecting the telephoto camera to capture images displayed as the preview image in displaying an execution screen of the camera application.

11. The method of claim 8, wherein the sensor 320 comprises at least one of a laser sensor, an ultrasonic sensor, an infrared ray sensor, a light detection and ranging (LIDAR) sensor or a time of flight (TOF) sensor.

12. The method of claim 11, further comprising:
identifying the object using the sensor 320 in response to receiving a reflection signal for a first signal generated with respect to a designated range; and
measuring a distance to the object using the sensor 320 based on the reflection signal for the first signal.

13. The method of claim 8, further comprising:
after receiving the input, identifying a movement of the electronic device 300 using an inertia sensor 450, before displaying the preview image by the execution of the camera application; and
if the identified movement of the electronic device 300 falls below a designated threshold level, measuring the distance to the object using the sensor 320,
wherein the inertia sensor 450 comprises at least one of an acceleration sensor or a gyro sensor.

14. The method of claim 8, wherein displaying the preview image comprises,
providing as the preview image, an image acquired through an image sensor of the selected camera while a lens of the selected camera is moved in response to the initial focus position.

15. A computer-readable recording medium for storing programs executable in a computer,
wherein the programs are caused by the computer to,
receive an input for starting execution of a camera application,
after receiving the input, obtain distance information of an object through a sensor, before displaying a preview image by the execution of the camera application,
select a camera for capturing an image of the object among a plurality of cameras based on the distance information,
identify an initial focus position of the selected camera based on the distance information for the object, and
display a preview image containing the object based on the initial focus position of the selected camera.
